# EUROPÄISCHE PATENTSCHRIFT

(11) **EP 1 761 751 B1**
(45) Veröffentlichungstag und Bekanntmachung des Hinweises auf die Patenterteilung: **23.04.2008**
(21) Anmeldenummer: 05754565.9
(22) Anmeldetag: 14.06.2005
(51) Int. Cl.: G01L 9/00, G01L 19/06, G01L 19/14

(54) **DRUCKAUFNEHMER**
PRESSURE SENSOR
MANOMETRE

(30) Priorität: 29.06.2004 DE 102004031582
(43) Veröffentlichungstag der Anmeldung: 14.03.2007
(73) Patentinhaber: Endress + Hauser GmbH + Co. KG, 79689 Maulburg (DE)
(72) Erfinder: DREWES, Ulfert, 79379 Müllheim (DE); HEGNER, Frank, 79540 Lörrach (DE)
(74) Vertreter: Andres, Angelika Maria
(86) Internationale Anmeldenummer: PCT/EP2005/052723
(87) Internationale Veröffentlichungsnummer: WO 2006/000534

(56) Entgegenhaltungen:
- WO-A-03/081197
- WO-A-20/05012865
- DE-A1- 4 234 290
- DE-A1- 10 227 479
- DE-A1- 19 603 674
- US-A- 5 665 921
- US-A- 5 824 909
- US-A1- 2003 151 126
- US-B1- 6 474 169
- US-B1- 6 591 687

## Beschreibung

Die vorliegende Erfindung betrifft einen Druckaufnehmer zum Erfassen eines Mediendrucks bzw. eines Mediendrucks. Insbesondere bei Druckaufnehmern die zur Druckmessung in aggressiven Chemikalien eingesetzt werden, erweist sich die Abdichtung zwischen der Druckmesszelle und der Medienöffnung des Sensorgehäuses als schwierig. Insbesondere die üblichen elastischen O-Ringe können nicht in allen Fällen verwendet werden können. Stattdessen kommen Flachdichtungen, insbesondere PTFE-Dichtungen, zum Einsatz, wobei PTFE zwar die gewünschte chemische Stabilität aufweist, aber mechanisch Probleme mit sich bringt, da PTFE keine ausreichende Elastizität aufweist und unter Druck sogar fließt. Kathan et al. offenbaren in der Offenlegungsschrift DE 19628255 A1 ein Druckmessgerät, bei dem eine ringförmige Flachdichtung aus PTFE zwischen der medienseitigen Stirnfläche der Druckmesszelle und einer axialen Anschlagfläche des Sensorgehäuses axial eingespannt ist, wobei die axiale Anschlagfläche federelastische Eigenschaften aufweist. Dieser Ansatz ist unter anderem deshalb problematisch, weil ein gleichmäßiges Anpressen der Flachdichtung erforderlich ist. Kleinste Winkelabweichungen einer der Komponenten, können zum Versagen der Dichtung führen.

Das Dokument US-A-5 824 909 offenbart einen Druckaufnehmer umfassend ein Gehäuse, das eine Messzellenkammer definiert, und das von einer ringförmigen ersten Dichtfläche umgeben ist; eine Druckmesszelle mit einem zweiten Dichtfläche; einen Dichtring; und eine Spannvorrichtung.

Der Erfindung liegt daher die Aufgabe zugrunde, einen Druckaufnehmer bereitzustellen, der die genannten Nachteile des Stands der Technik überwindet. Diese Aufgabe wird erfindungsgemäß gelöst durch den Druckaufnehmer gemäß des unabhängigen Anspruchs 1.

Der erfindungsgemäße Druckaufnehmer umfasst insbesondere ein Gehäuse mit einer Gehäuseachse, in dem eine Messzellenkammer definiert ist, welche über eine Öffnung mit einem Druck beaufschlagbar ist; wobei die Öffnung von einer ringförmigen ersten Dichtfläche mit einem ersten Normalenvektor umgeben ist; eine Druckmesszelle mit einer der Öffnung zugewandten zweiten Dichtfläche mit einem zweiten Normalenvektor, und eine von der Dichtfläche abgewandten Anschlagfläche mit einem dritten Normalenvektor; einem Dichtring; und eine Einspannvorrichtung, welche sich mit dem Gehäuse im Eingriff befindet, wobei die Druckmesszelle und der Dichtring mittels einer axialen Einspannkraft dergestalt zwischen der Einspannvorrichtung und der ersten Dichtfläche, eingespannt sind, dass der Dichtring druckdicht zwischen der ersten Dichtfläche und die zweiten Dichtfläche angeordnet ist, dadurch gekennzeichnet, dass der Druckaufnehmer ein Ausgleichsanordnung aufweist, die einen ersten Übertragungskörper aufweist, welcher der Öffnung zugewandt ist, und einen zweiten Übertragungskörper, welcher der Öffnung abgewandt ist, wobei die axiale Einspannkraft durch die Ausgleichsanordnung von der Einspannvorrichtung zur Druckmesszelle übertragen wird, und der erste Übertragungskörper bezüglich des zweiten Übertragungskörpers um zwei zueinander senkrechte Achsen kippfähig ist.

Die zueinander senkrechten Achsen, um welche der erste Übertragungskörper kippfähig ist, verlaufen vorzugsweise im wesentlichen senkrecht zur Gehäuseachse und schneiden diese. Im wesentlichen senkrecht bedeutet hier, dass die Abweichungen von der Senkrechten lediglich durch die mittels der Ausgleichsanordnung auszugleichenden Ausrichtungsfehler gegeben sind.

Im Idealfall verlaufen sämtliche der genannten Normalenvektoren parallel zueinander und zur Gehäuseachse. Lediglich aufgrund von Fertigungstoleranzen kann es zu geringen Abweichungen von der Parallelität kommen. Die Kippfähigkeit der Übertragungskörper um die beschriebenen Achsen muss daher über einen solchen Bereich gegeben sein, dass Abweichungen der Normalenvektoren von der Richtung der Gehäuseachse aufgrund von Fertigungstoleranzen ausgeglichen werden können. Eine Kippfähigkeit von etwa 0,5° oder 1° kann beispielsweise schon ausreichend sein. Sollte mit größeren Toleranzen zu rechnen sein, ist entsprechend eine größere Kippfähigkeit vorzusehen.

Die Ausgleichsanordnung kann beispielsweise ein Kugelgelenk zwischen den Übertragungskörpern aufweisen. Das Kugelgelenk kann eine Kugel umfassen, wobei in diesem Fall die beiden Übertragungskörper jeweils einen Kugellagerschalenabschnitt aufweisen, und die Kugel zwischen den beiden Kugellagerschalen eingespannt ist. Andererseits kann das Kugelgelenk mindestens einen konvexen Kugeloberflächenabschnitt und mindestens einen dazu komplementären Kugellagerschalenabschnitt aufweisen, wobei der erste bzw. der zweite Übertragungskörper jeweils Kugeloberflächenabschnitt und mindestens einen dazu komplementären Kugellagerschalenabschnitt aufweisen. Der Radius der Kugellagerschale kann ggf. von dem als der Radius der Kugeloberfläche abweichen.

In einer anderen Ausgestaltung umfasst einer der Übertragungskörper einen mit der Achse des Übertragungskörpers fluchtenden Dorn mit einer Spitze, und der andere Übertragungskörper ein mit dessen Achse fluchtendes Lager in dem die Spitze des Doms aufsitzt um die axialen Einspannkräfte zu übertragen. Das Lager weist vorzugsweise eine konkave Oberfläche auf, deren Scheitelpunkt mit der Achse fluchtet, so dass der Dorn durch die axiale Einspannkraft bezüglich des Lagers zentriert wird.

In einer weiteren Ausgestaltung umfasst die Ausgleichsanordnung ein Universalgelenk mit zwei zueinander senkrechten Achsen zwischen den Übertragungskörpem. Die Achsen verlaufen vorzugsweise in einer Ebene, die bis auf auszugleichende Ausrichtungsfehler von nicht mehr als 2°, besonders bevorzugt von nicht mehr als 1°, senkrecht zur Gehäuseachse verläuft.

Die beiden Übertragungskörper können jeweils separat gefertigte Teile sein, oder sie können einstückig mit anderen Komponenten ausgebildet sein. Beispielsweise kann einer der Übertragungskörper in eine Komponente der Einspannvorrichtung integriert sein. Gleichermaßen kann einer der Übertragungskörper einstückig mit einer Baugruppe der Druckmesszelle, usw. ausgebildet sein.

In einer Weiterbildung der Erfindung weist der der Druckmesszelle zugewandte Übertragungskörper den gleichen Werkstoff wie die Druckmesszelle auf, während der der Einspannvorrichtung zugewandte Übertragungskörper einen Werkstoff der Einspannvorrichtung aufweist.

Die Druckmesszelle umfasst beispielsweise einen Grundkörper und/oder eine Messmembran aus einem nicht-metallischen Werkstoff, insbesondere einem keramischen Werkstoff oder ein Halbleitermaterial aufweisen. Das Gehäuse und die Einspannvorrichtung weisen dagegen in den beispielsweise einen metallischen Werkstoff, beispielsweise Stahl, insbesondere Edelstahl, oder Aluminium auf.

Wie eingangs erörtert ist die Kippfähigkeit insbesondere für Druckaufnehmer von Interesse, bei denen der Dichtring mindestens eine Flachdichtung aufweist. In einer derzeit bevorzugten Ausgestaltung weist der Dichtring einen keramischen Ring mit zwei planparallelen Stirnflächen aufweist, auf denen jeweils eine Flachdichtung angeordnet ist. Weitere Einzelheiten zur Ausgestaltung des axial elastischen Elements sind der Deutschen Patentanmeldung 10334854.9 zu entnehmen.

In einer weiteren Ausgestaltung eines erfindungsgemäßen Druckaufnehmers ist ein axial elastisches Element vorgesehen. Dieses axial elastische Element kann eine Tellerfeder sein, die beispielsweise die axiale Anschlagfläche bildet bzw. in diese integriert ist, eine Wellrohrmembran, welche in die Medienöffnung integriert ist, sowie eine Feder, z.B. eine Schraubenfeder oder eine Tellerfeder, die zwischen der Rückseite der Druckmesszelle und einem Einspannring axial eingespannt ist. Das axial elastische Element gewährleistet ein solches Maß an Elastizität, dass die Dichtungselemente bei Druckschwankungen und Druckstößen des Mediums sowie bei Temperaturschwankungen des Druckaufnehmers nur solchen Schwankungen des axialen Einspanndrucks ausgesetzt sind, dass die Dichtungswirkung nicht beeinträchtigt ist. Zudem dient das elastische Element dazu, das Setzen bzw. die plastische Verformung der Dichtungselemente unter Last zu kompensieren. Die Elastizität ist vorzugsweise solchermaßen ausgelegt, dass der axiale Einspanndruck auf das erste und das zweite Dichtungselement über Temperaturzyklen zwischen -40°C und 150°C um nicht mehr als 50% weiter vorzugsweise um nicht mehr als 25% und besonders bevorzugt um nicht mehr als 12% des maximal auftretenden Einspanndrucks schwankt. Weiterhin ist es derzeit bevorzugt, dass der axiale Einspanndruck auf das erste und das zweite Dichtungselement über Temperaturzyklen zwischen -40°C und 150°C nicht unter 0,8 MPa vorzugsweise um nicht unter 0,9 MPa und besonders bevorzugt nicht unter 1 MPa sinkt. Weitere Einzelheiten zur Ausgestaltung des axial elastischen Elements sind der Deutschen Patentanmeldung 10334854.9 zu entnehmen.

Die Erfindung wird nun anhand der beigefügten Zeichnungen beschrieben.

Es zeigt:

Fig. 1: einen Längsschnitt durch ein erstes Ausführungsbeispiel eines erfindungsgemäßen Druckaufnehmers; und

Fig. 2: einen Längsschnitt durch ein zweites Ausführungsbeispiel einer Ausgleichsanordnung für einen erfindungsgemäßen Druckaufnehmer.

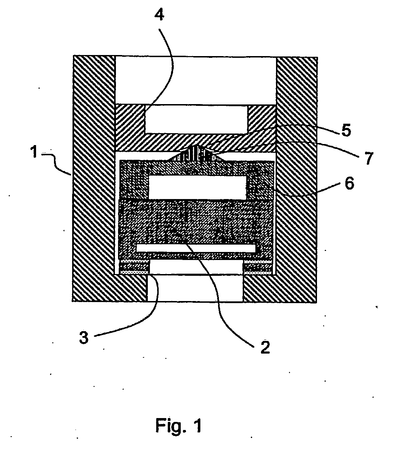

Der in Fig. 1 gezeigte Druckaufnehmer umfasst eine zylindrische keramische Druckmesszelle 2, beispielsweise mit einem Grundkörper und einer Messmembran aus Korund, die nach dem kapazitiven Messprinzip arbeitet. Die Druckmesszelle 2 ist in einer Messzellenkammer in einem zylindersymmetrischen Gehäuse 1 angeordnet. Das Gehäuse 1 weist eine Öffnung auf, durch welche die Messzellenkammer mit einem Druck beaufschlagbar ist. Die Öffnung ist von einer sich radial einwärts erstreckenden Schulter umgeben, welche eine axiale Anschlagfläche für die Druckmesszelle aufweist. Zwischen der Druckmesszelle und der axialen Anschlagfläche ist ein Dichtring 3 angeordnet. Die Druckmesszelle ist mittels einer Einspannschraube 4, die in ein komplementäres Gewinde in der Wand der Messzellenkammer eingreift, gegen den Dichtring 3 axial eingespannt.

Das Gehäuse 1 und die Einspannschraube 4 weisen jeweils einen metallischen Werkstoff auf.

Zwischen der Einspannschraube 4 und der Druckmesszelle ist ein Entkopplungskörper 6 angeordnet, welcher die axiale Einspannkraft von der Einspannschraube zur Druckmesszelle überträgt. Der Entkopplungskörper weist den gleichen Werkstoff wie der Grundkörper der Messzelle 2 auf. Damit gibt es bei Temperaturschwankungen keine Wärmeausdehnungsunterschiede zwischen dem Grundkörper und der an den Grundkörper angrenzenden Komponente zum Einleiten der axialen Einspannkraft.

Der Entkopplungskörper umfasst eine kreisscheibenförmige Platte, die auf einer Oberfläche einen ringförmig hervorstehenden Rand aufweist. Dieser Rand stützt sich auf der Druckmesszelle ab. Auf der dem Ring abgewandten Seite ist ein kegelförmiger Dorn 7 angeordnet dessen Achse mit der gemeinsamen Achse des Rings und der kreisscheibenförmigen Platte fluchtet. Der Dorn 7 dient als ein erster Übertragungskörper einer Ausgleichsanordnung zum Ausgleich von Ausrichtungsfehlern zwischen dem Einspannschraube und dem Entkopplungskörper, bzw. letztlich zwischen dem Gehäuse und der Druckmesszelle. Der Dorn 7 ist fest mit dem Entkopplungskörper 6 verbunden und weist das gleiche Material wie der Entkopplungskörper 6 auf. Die Verbindung zwischen dem Dorn 7 und dem Entkopplungskörper kann beispielsweise ein Lot, insbesondere ein Aktivhartlot umfassen.

Die Einspannschraube 4, weist eine kreisscheibenförmige Platte auf, in der eine kegelförmige Aussparung 5 ausgebildet ist, welche dem kegelförmigen Dorn 7 zugewandt ist und einen größeren Öffnungswinkel als dieser aufweist. Die Einspannschraube dient als ein zweiter Übertragungskörper der Ausgleichanordnung, denn die Einspannschraube kann gegenüber dem Entkopplungskörper um beliebige Achsen gekippt werden, die durch den Auflagepunkt des Doms 7 in der Aussparung 5 der Einspannschraube verlaufen. Diese Anordnung gewährleistet stets homogene Einspannkräfte auf den Dichtring 3 trotz ggf. vorhandener Fertigungstoleranzen hinsichtlich der axialen Ausrichtung der Einspannschraube bezüglich der Druckmesszelle bzw. der axialen Anschlagfläche um die Gehäuseöffnung.

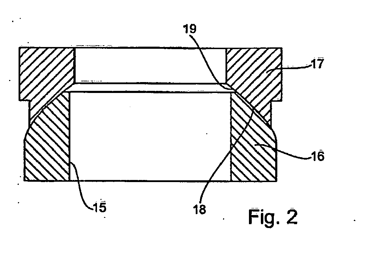

Fig. 2 zeigt eine alternative Ausgestaltung für eine Ausgleichsanordnung, die in diesem Fall einen ersten ringförmigen Übertragungskörper 16 und einen zweiten ringförmigen Übertragungskörper 17 umfasst. Der erste Übertragungskörper umfasst eine erste planare Stirnfläche und einen konvexen Kugeloberflächenabschnitt 18 welcher der ersten planaren Stirnfläche abgewandt und dem zweiten Übertragungskörper 17 zugewandt ist. Der zweite Übertragungskörper 17 umfasst eine zweite planare Stirnfläche und einen konkaven Kugelschalenabschnitt 19, welcher der zweiten planaren Stirnfläche abgewandt, zu dem konvexen Kugeloberflächenabschnitt komplementär ist und auf diesem aufsitzt. Die zweite planare Stirnfläche kann somit gegenüber der ersten planaren Stirnfläche verkippt werden und somit Ausrichtungsfehler ausgleichen. In einer derzeit bevorzugten Ausgestaltung dieses Ausführungsbeispiels umfasst der zweite Übertragungskörper in seiner Mantelfläche zusätzlich ein Gewinde, welches in das Innengewinde der Messzellenkammer im Gehäuse eingreift. Insoweit dient der zweite Übertragungskörper als Einschraubring. Der zweite Übertragungskörper setzt vorzugsweise auf einem Ringförmigen keramischen Entkopplungskörper auf, der die axiale Einspannkraft auf die Rückseite der Druckmesszelle überträgt. Der erste und der zweite Übertragungskörper sind bei diesem Ausführungsbeispiel aus dem gleichen metallischen Werkstoff gefertigt, beispielsweise einem Edelstahl. Zur Erhöhung der Leitfähigkeit sind die Kugeloberflächen mit einem Gleitmittel beschichtet.

## Patentansprüche

1. Druckaufnehmer, umfassend ein Gehäuse (1) mit einer Gehäuseachse, in dem eine Messzellenkammer definiert ist, welche über eine Öffnung mit einem Druck beaufschlagbar ist; wobei die Öffnung von einer ringförmigen ersten Dichtfläche mit einem ersten Normalenvektor umgeben ist; eine Druckmesszelle (2) mit einer der Öffnung zugewandten zweiten Dichtfläche mit einem zweiten Normalenvektor, und eine von der Dichtfläche abgewandten Anschlagfläche mit einem dritten Normalenvektor; einem Dichtring (3); und einer Einspannvorrichtung (4), welche sich mit dem Gehäuse in Eingriff befindet, wobei die Druckmesszelle (2) und der Dichtring (3) mittels einer axialen Einspannkraft dergestalt zwischen der Einspannvorrichtung (4) und der ersten Dichtfläche, eingespannt sind, dass der Dichtring (3) druckdicht zwischen der ersten Dichtfläche und der zweiten Dichtfläche angeordnet ist, **dadurch gekennzeichnet, dass** der Druckaufnehmer ein Ausgleichselement (4-7) aufweist, welches einen ersten Übertragungskörper (7) aufweist, welcher der Öffnung zugewandt ist, und einen zweiten Übertragungskörper (4,5), welcher der Öffnung abgewandt ist, wobei die axiale Einspannkraft durch das Ausgleichselement von der Einspannvorrichtung (4) zur Druckmesszelle übertragen wird, und der erste Übertragungskörper bezüglich des zweiten Übertragungskörpers um zwei zueinander senkrechte Achsen, kippfähig ist.

2. Druckaufnehmer nach Anspruch 1, wobei das Ausgleichselement ein Kugelgelenk zwischen den Ubertragungskörpem aufweist.

3. Druckaufnehmer nach Anspruch 2, wobei das Kugelgelenk eine Kugel umfasst, die beiden Übertagungskörper jeweils einen Kugellagerschalenabschnitt aufweisen, und die Kugel zwischen den beiden Kugellagerschalen eingespannt ist.

4. Druckaufnehmer nach Anspruch 2, wobei das Kugelgelenk mindestens einen konvexen Kugeloberflächenabschnitt und mindestens einen dazu komplementären Kugellagerschalenabschnitt aufweist.

5. Druckaufnehmer nach Anspruch 1, wobei das Ausgleichselement ein Universalgelenk mit zwei zueinander senkrechten Achsen zwischen den Übertragungskörpem umfasst.

6. Druckaufnehmer nach Anspruch 1 bis 4, wobei das Ausgleichselement einen Dorn (7) umfasst, welcher dessen Spitze in einer konkaven Lagerschale aufsitzt.

7. Druckaufnehmer nach einem der vorhergehenden Ansprüche, wobei die Druckmesszelle einen Grundkörper und eine Messmembran umfasst, die einen keramischen Werkstoff aufweisen.

8. Druckaufnehmer nach einem der vorhergehenden Ansprüche, wobei das Gehäuse (1) einen Metallischen Werkstoff, insbesondere Edelstahl, aufweist.

9. Druckaufnehmer nach einem der vorhergehenden Ansprüche, wobei der Dichtring mindestens eine Flachdichtung aufweist.

10. Druckaufnehmer nach Anspruch 10, wobei der Dichtring einen keramischen Ring mit zwei planparallelen Stirnflächen aufweist, auf denen jeweils eine Flachdichtung angeordnet ist.

## Claims

1. A pressure sensor, comprising a housing (1) with a housing axis, in which a measuring cell chamber is defined which can be supplied with a pressure via an opening; the opening being surrounded by an annular first sealing surface with a first normal vector; a pressure measuring cell (2) with a second sealing surface facing the opening with a second normal vector, and a stop surface remote from the sealing surface with a third normal vector; a sealing ring (3) and a clamping device (4) which is engaged with the housing, the pressure measuring cell (2) and the sealing ring (3) being clamped between the clamping device (4) and the first sealing surface by means of an axial clamping force such that the sealing ring (3) is located in pressure-tight manner between the first sealing surface and the second sealing surface, **characterised in that** the pressure sensor has a compensating element (4-7) which has a first transmission member (7) which is close to the opening, and a second transmission member (4, 5) which is remote from the opening, the axial clamping force being transmitted by the compensating element from the clamping device (4) to the pressure measuring cell, and the first transmission member being able to tilt relative to the second transmission member about two axes perpendicular to one another.

2. A pressure sensor according to Claim 1, wherein the compensating element has a ball-and-socket joint between the transmission members.

3. A pressure sensor according to Claim 2, wherein the ball-and-socket joint comprises a ball, both transmission members each have a ball bearing shell section and the ball is clamped between the two ball bearing shells.

4. A pressure sensor according to Claim 2, wherein the ball-and-socket joint has at least one convex spherical surface section and at least one ball bearing shell section complementary thereto.

5. A pressure sensor according to Claim 1, wherein the compensating element comprises a universal joint with two axes perpendicular to one another between the transmission members.

6. A pressure sensor according to Claims 1 to 4, wherein the compensating element comprises a mandrel (7) the tip of which is seated in a concave bearing shell¹.
¹"welcher" in the original German has not been translated, as it appears to be redundant.

7. A pressure sensor according to one of the preceding claims, wherein the pressure measuring cell comprises a basic body and a measuring membrane which comprise a ceramic material.

8. A pressure sensor according to one of the preceding claims, wherein the housing (1) comprises a metallic material, in particular high-grade steel.

9. A pressure sensor according to one of the preceding claims, wherein the sealing ring has at least one flat seal.

10. A pressure sensor according to Claim 10, wherein the sealing ring has a ceramic ring with two plane-parallel end faces, on each of which a flat seal is arranged.

## Revendications

1. Capteur de pression, comprenant un boîtier (1) avec un axe de boîtier, dans lequel est définie une chambre de cellule de mesure, laquelle peut être soumise à une pression par le biais d'une ouverture, cette dernière étant entourée d'une première surface d'étanchéité annulaire avec un premier vecteur normal ; une cellule de mesure de pression (2) avec une deuxième surface d'étanchéité, faisant face à l'ouverture, avec un deuxième vecteur normal, et une surface de butée, située à l'opposé de la surface d'étanchéité, avec un troisième vecteur normal ; une bague d'étanchéité (3) et un dispositif de serrage (4), qui est en prise avec le boîtier, la cellule de mesure de pression (2) et la bague d'étanchéité (3) étant serrées au moyen d'une force de serrage axiale entre le dispositif de serrage (4) et la première surface d'étanchéité, de telle manière que la bague d'étanchéité (3) est disposée de façon étanche (à la pression) entre la première surface d'étanchéité et la deuxième surface d'étanchéité, **caractérisé en ce que** le capteur de pression comporte un élément de compensation (4, 17), qui comprend un premier corps de transmission (7), lequel fait face à l'ouverture, et un deuxième corps de transmission (4, 5), lequel est situé à l'opposé de l'ouverture, la force de serrage axiale étant transmise à la cellule de mesure de pression par l'élément de compensation du dispositif de serrage (4), et le premier corps de transmission pouvant basculer par rapport au deuxième corps de transmission autour de deux axes perpendiculaires l'un à l'autre.

2. Capteur de pression selon la revendication 1, pour lequel l'élément de compensation présente une articulation sphérique entre les corps de transmission.

3. Capteur de pression selon la revendication 2, pour lequel l'articulation sphérique comprend une bille, les deux corps de transmission présentent chacun une partie de coquille de roulement à bille, et la bille est serrée entre les deux coquilles de roulement à bille.

4. Capteur de pression selon la revendication 2, pour lequel l'articulation sphérique présente au moins une partie de surface sphérique convexe et au moins une partie de coquille de roulement à bille complémentaire à cette surface.

5. Capteur de pression selon la revendication 1, pour lequel l'élément de compensation comprend une articulation universelle avec deux axes perpendiculaires l'un à l'autre entre les corps de transmission.

6. Capteur de pression selon les revendications 1 à 4, pour lequel l'élément de compensation comprend une broche (7), dont la pointe repose dans une coquille de palier concave.

7. Capteur de pression selon l'une des revendications précédentes, pour lequel la cellule de mesure de pression comprend un corps de base et une membrane de mesure, qui présentent un matériau en céramique.

8. Capteur de pression selon l'une des revendications précédentes, pour lequel le boîtier (1) présente un matériau métallique, notamment en acier inoxydable.

9. Capteur de pression selon l'une des revendications précédentes, pour lequel la bague d'étanchéité présente au moins un joint plat.

10. Capteur de pression selon la revendication 10, pour lequel la bague d'étanchéité présente une bague en céramique avec deux surfaces frontales planes et parallèles, sur lesquelles est disposé respectivement un joint plat.
